# EUROPEAN PATENT APPLICATION

(11) **EP 1 514 758 A1**
(43) Date of publication of application: **16.03.2005**
(21) Application number: 04425659.2
(22) Date of filing: 01.09.2004
(51) Int. Cl.: B60T 17/04, F16L 37/35

(54) **Apparatus for connection of a caliper and a pump for hydraulic brakes**

(30) Priority: 12.09.2003 IT FI20030240
(71) Applicant: Formula S.r.L., 59100 Prato (IT)
(72) Inventor: Becocci, Andrea F., 59100 Prato (IT); Becocci, Francesco, 59100 Prato (IT)
(74) Representative: Martini, Lazzaro

(57) **Abstract**

An Apparatus for connecting a pump and a caliper of a hydraulic brake, comprising a hose (1) within which a fluid for hydraulic brakes can flow, characterized in that the said hose (1) is provided, in correspondence of its ends, with a hermetic-seal reversible coupling (2) connectable to a connector (4, 5) of the pump and, respectively, of the caliper.

## Description

The present invention relates to an apparatus for connection of a caliper and a pump for hydraulic brakes.

The connection between a caliper and a pump of a hydraulic brake is known to be made up of a hose acting as a means for transmitting the braking-activation command from the pump to the caliper.
It is also known that, in case of novel assembly of the braking system on a vehicle, either for maintenance or replacement of a component of the system, a draining operation is performed to ensure that no air bubbles are present in the circuit of the hydraulic fluid which are likely to cause drawbacks when the system is started. Accordingly, every time a system's assembly or service operation is carried out, or a component is replaced, such operation takes a relatively long time and is to be entrusted to qualified personnel, so that the incidence of the cost of labour is cause for a rise in the cost of the whole operation.

The main object of the present invention is to eliminate, or at least greatly reduce, the above drawbacks.

This result has been achieved, according to the invention, by adopting the idea of making an apparatus having the characteristics disclosed in the claim 1. Further characteristics being set forth in the dependent claims.

The present invention makes it possible to drastically reduce the times for assembly or for maintenance of braking systems of the type above mentioned, by eliminating the need of providing each time for a drainage of the system and, at the same time, ensuring a higher efficiency in storing, handling and transporting the individual components. In addition to this, an apparatus according to the present invention is relatively easy to make, cost-effective and reliable even after a prolonged service life.

These and other advantages and characteristics of the invention will be best understood by anyone skilled in the art from a reading of the following description in conjunction with the attached drawings given as a practical exemplification of the invention, but not to be considered in a limitative sense, wherein:
- Fig. 1A shows a schematic view in longitudinal section of an apparatus according to the invention, in a first embodiment thereof;
- Figs. 1B and 1C show enlarged details of Fig. 1A;
- Figs. 1D and 1E are a side view and a front view of the piston (9);
- Fig. 2A is a schematic view in longitudinal section of an apparatus according to the invention, in a further embodiment thereof;
- Figs. 2B and 2C show enlarged details of Fig. 2A.

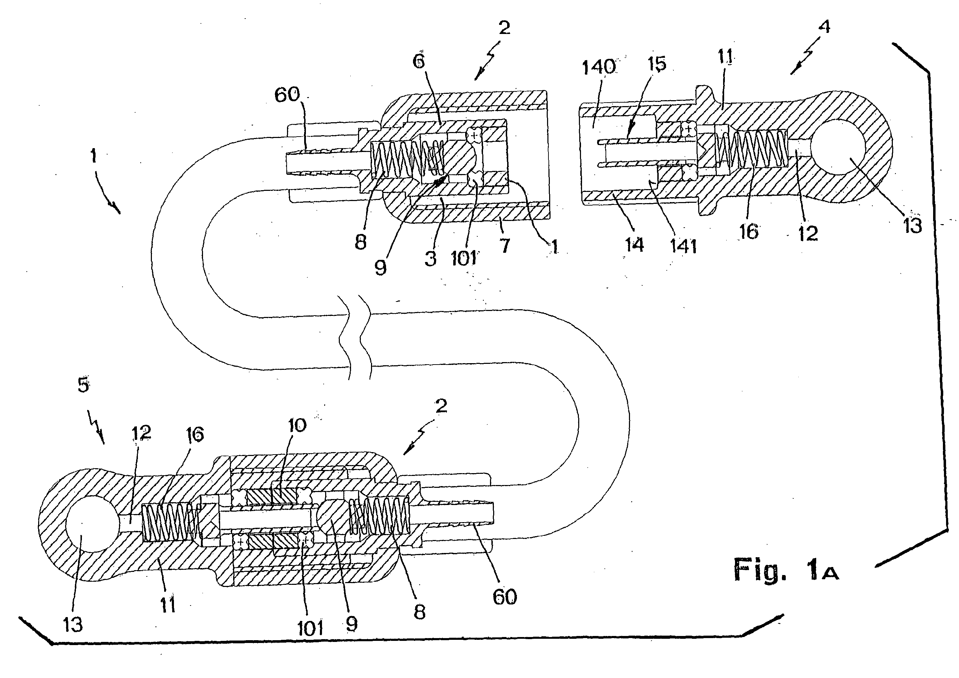

Reduced to its basic structure and reference being made to Figs. 1A-1C of the accompanying drawings, an apparatus according to the present invention comprises a hose (1), preferably flexible, able to be filled with fluid for hydraulic brakes and provided, in correspondence of both ends, with a hermetic-seal reversible coupling (2) to allow a tight-seal, reversible connection, on one side, with a body (4) connecting with a pump for hydraulic brakes and, on the other side, with a body (5) connecting with a caliper of a hydraulic brake.

According to the example illustrated in Figs. 1A-1C of the accompanying drawings, the said couplings (2) located at both ends of hose (1) are identical with each other and, structurally identical to each other are also the said connectors (4) and (5). More precisely, each coupling (2) comprises a substantially cylindrical body (6) which has a drilled shank (60) to be fitted into the hose (1) and is located inside a ring nut (7) having internal threading and whose inner diameter (dg) is larger than the outer diameter (dc) of the cylindrical body (6), so that a cylindrical space (3) results between the body (6) and the ring nut (7). Inside said body (6) is a spring (8) disposed along the longitudinal axis of body (6) and to which a piston (9) is associated.
The body of the latter has a substantially spherical shape, with a rear appendix (92) on which an end portion of said spring (8) is fitted, and with four radial appendixes (91) which, in cooperation with the internal wall of said body (6), define four ports (90).

In practice, the said appendixes (91) of the piston (9) are orthogonal to the longitudinal axis of the cylinder (6), and the said ports (90) are parallel to said axis; the spring (8) results between the piston (9) and the base (61) of cylinder (6) from which the shank (60) extends to fit into the hose (1).

Mounted in correspondence of the other base (62) of cylinder (6) is a collar (10) and, between the latter and the piston (9) there is interposed a multilobe O-ring (101). The said collar (10) and the said O-ring (101) are disposed coaxial to each other and inside the cylinder (6). The inner diameter of the O-ring (101) is smaller than that of the piston with spherical head (9), so that the same piston results suitable for closing the port thereof.

In practice, the piston with spherical head (9) results between the spring (8) and the O-ring (101) which, in turn, results between the piston with spherical head (9) and the collar (10).

Again with reference to the example shown in Figs. 1A-1E of the accompanying drawings, each of said connectors (4, 5) comprises a body (11) exhibiting an internal cavity which communicates, through a corresponding port (12, 13), with a pump or respectively with a caliper of the braking system.
The said body (11) has a front portion (14) with external threading on which a ring nut (7) of a coupling (2) is to be screwed and whose inner diameter (da) is equal to the internal diameter (dg) of the ring nut (7), so that the cavity (140) delimited by said portion (14) of body (11) will result suitable for receiving the portion of body (6) which results inside the ring nut (7). The length (Ia) of said portion (14) of body (11) is such that when screwing the ring nut (7) all the way in onto the threaded portion (14) of body (11), the front base (62) of body (6) belonging to the coupling (2) will result in abutment with an internal base (141) of the said cavity (140).

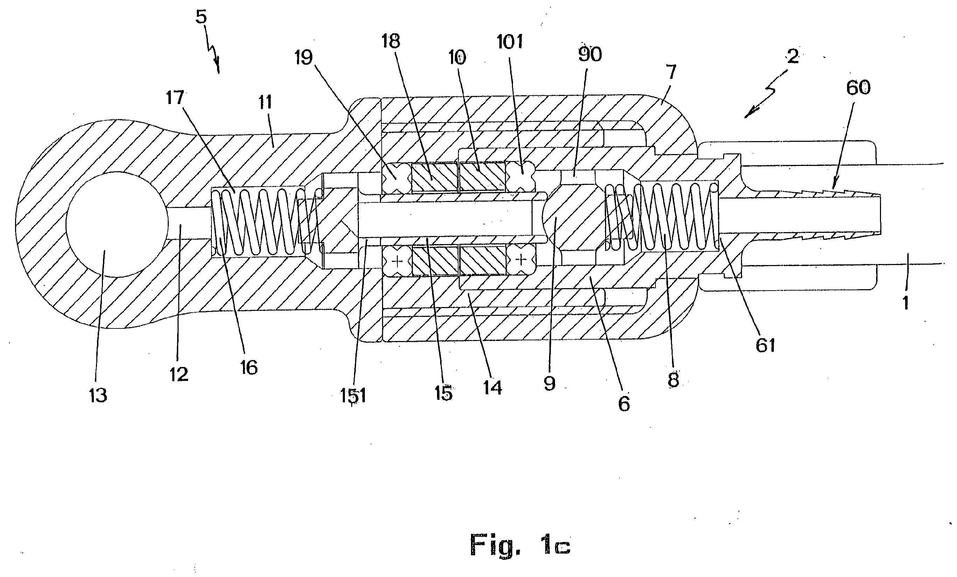

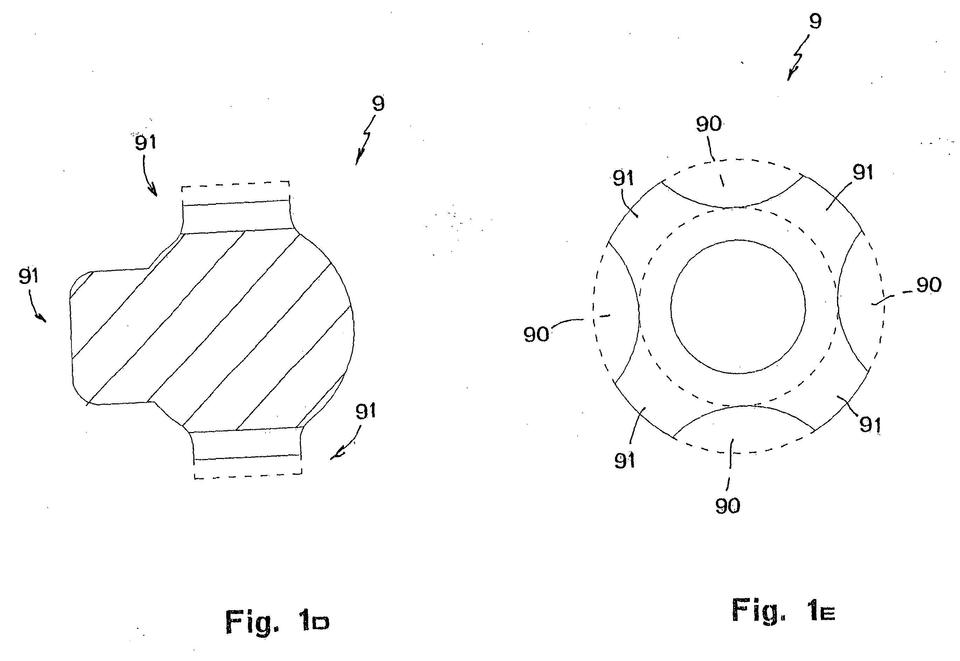

Positioned inside the said cavity (140) of body (6) is a hollow pin (15) associated with a spring (16) positioned between the rear base of the same pin (15) and the said port (12), that is, positioned within a second cavity (17) of body (11) and communicating with the first cavity (140) coaxially thereto.
The said pin (15) exhibits a front port (150) and a perimetral rear port (151), and can slide freely within the ports of a collar (18) and a multilobe O-ring (19) fitted on the same pin on the back of said internal base (141).
When the ring nut (7) is screwed all the way in onto the threaded portion (14) of body (11) - as illustrated in the bottom part of Fig. 1A and in Fig. 1C - both the piston with spherical head (9) and the hollow pin (15) move back, so that the port of the O-ring (101) and the port (151) of pin (15) become exposed. In relation to this, the hydraulic fluid is free to flow through the ports (12) and (13), cavity (17), port (151), port (150), ports (90) and shank (60), or vice versa.

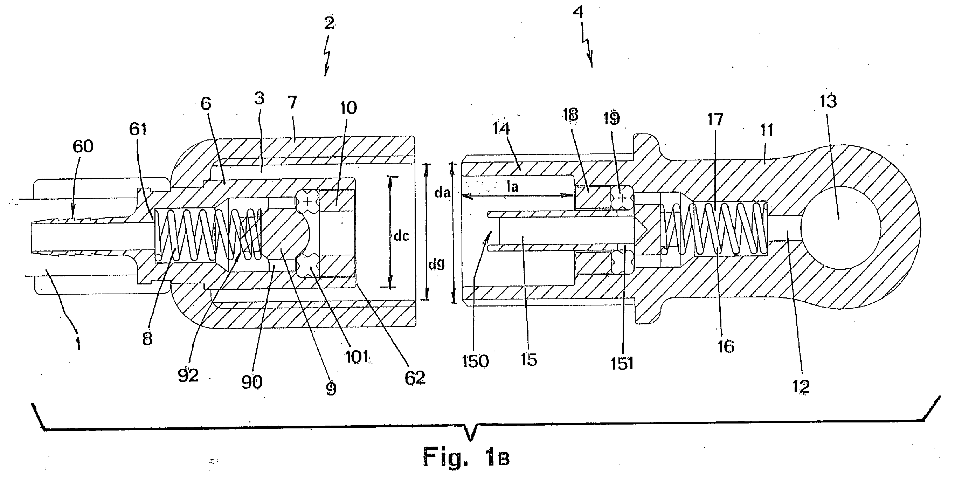

When, instead, any of the couplings (2) is not connected, as above mentioned, to a connector (4, 5), no circulation of fluid can occur within the braking system which results sealed (as represented in the top part of Fig. 1A and in Fig. 1B).

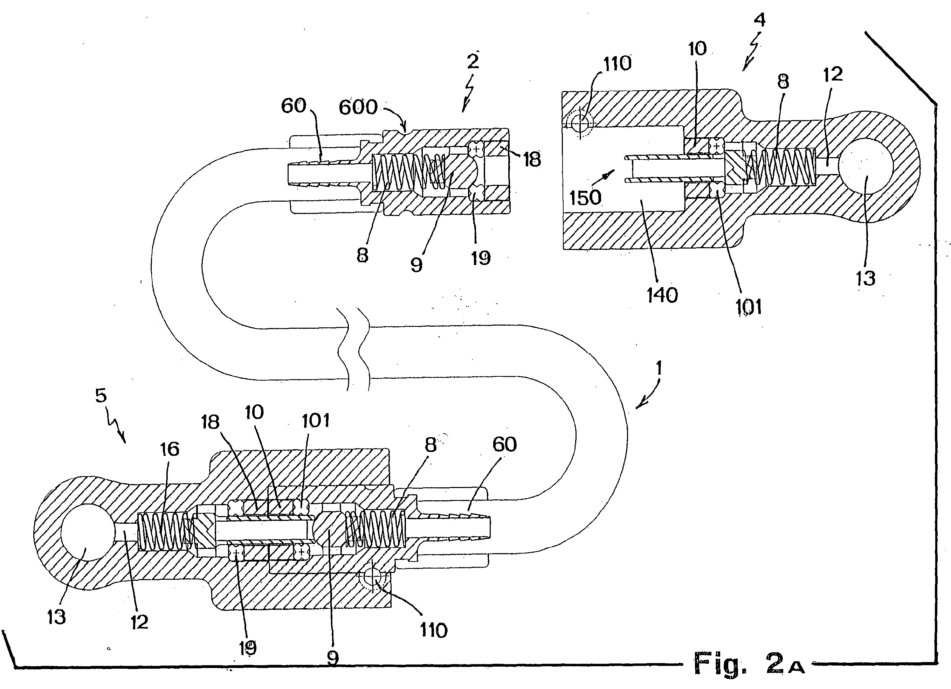

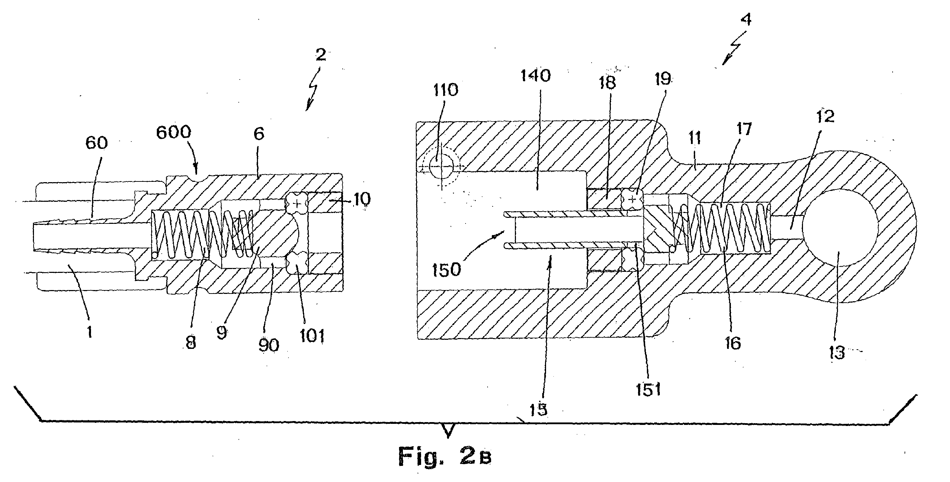

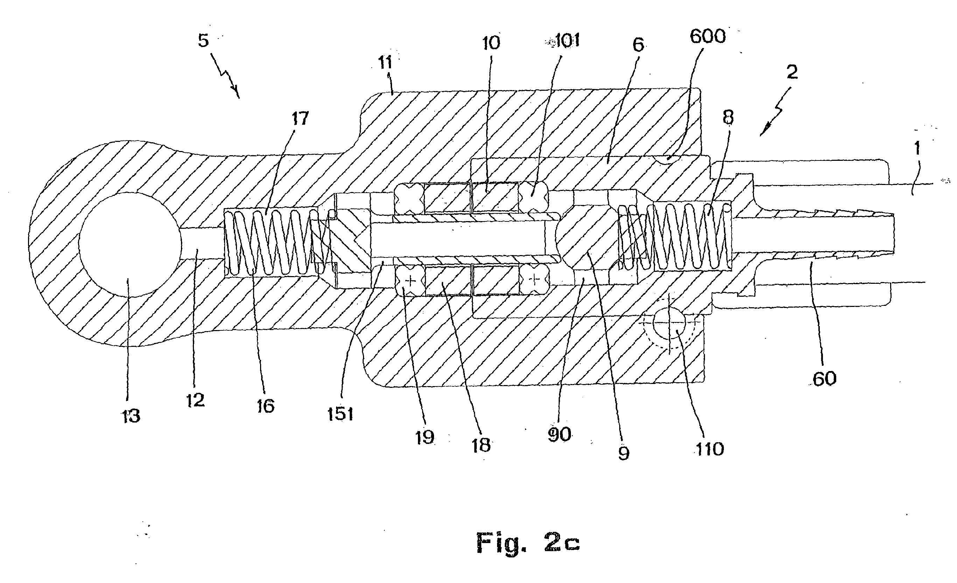

With reference to the example illustrated in Figs. 2A-2C of the accompanying drawings, the operational and constructional structure is substantially equal to that of the example shown in Figs. 1A-1E, except that the bodies (6) and (11) are not provided with threading and their mutual attachment is carried out by screw means acting through a hole (110) formed in the body (11) of connector (4, 5) and interesting the internal surface of the body (6) of each coupling (2) in correspondence of an annular groove (600).

In the drawings of Figs. 2A-2C, the individual components are numbered like in Figs. 1A-1E, as they exhibit the same constructional structure and interact likewise.

## Claims

1. Apparatus for connecting a pump and a caliper of a hydraulic brake, comprising a hose (1) within which a fluid for hydraulic brakes can flow, **characterized in that** the said hose (1) is provided, in correspondence of its ends, with a hermetic-seal reversible coupling (2) connectable to a connector (4, 5) of the pump and, respectively, of the caliper.

2. Apparatus according to claim 1, **characterized in that** the said couplings (2) are identical to each other.

3. Apparatus according to claim 1, **characterized in that** the said connectors (4; 5) are identical to each other.

4. Apparatus according to claim 1, **characterized in that** each coupling (2) comprises a substantially cylindrical body (6) inside of which a piston (9) with spherical head is positioned, said piston being associated with an elastic member (8) and delimiting, in cooperation with the internal wall of said body (6), a plurality of axial ports (90) which are occluded when the elastic member (8) is extended, and are open when the elastic member (8) is compressed: the said ports (90) being in communication with said hose (1).

5. Apparatus according to claims 1 and 4, **characterized in that** the said elastic member (8) is compressed when the said body (6) is connected with one of said connectors (4; 5).

6. Apparatus according to claim 1, **characterized in that** each of said connectors (4; 5) comprises a body (11) exhibiting an internal cavity which communicates, through a corresponding port (12, 13), with a pump or respectively with a caliper, and inside which a hollow pin (15) is positioned, associated with an elastic member (16) and having perimetral ports (151) which are occluded when the elastic member (16) is extended and are open when the elastic member (16) is compressed: the said ports (151) being in communication with said hose (1).
